# EUROPEAN PATENT APPLICATION

(11) **EP 4 596 112 A1**
(43) Date of publication of application: **06.08.2025**
(21) Application number: 24219290.4
(22) Date of filing: 12.12.2024
(51) Int. Cl.: B05C 5/02, B05C 9/06, H01M 4/04

(54) **SLOT DIE COATER**

(30) Priority: 01.02.2024 KR 20240015933
(71) Applicant: SAMSUNG SDI CO., LTD., Yongin-si, Gyeonggi-do 17084 (KR); Korea University Research and Business Foundation, Seoul 02841 (KR)
(72) Inventor: Park, Jin Seok, 17084 Yongin-si, Gyeonggi-do (KR); Nam, Hyun, 17084 Yongin-si, Gyeonggi-do (KR); Bae, Juhye, 17084 Yongin-si, Gyeonggi-do (KR); Lee, Taeil, 17084 Yongin-si, Gyeonggi-do (KR); Jung, Hyun Wook, 02841 Seoul (KR); Jee, Sanghun, 02841 Seoul (KR); Kim, Donguk, 02841 Seoul (KR)
(74) Representative: Gulde & Partner

(57) **Abstract**

A slot die coater (300) includes a slot die comprising a first slot (310) configured to dispense a first active material (242) therethrough, a second slot (320) configured to dispense a second active material (244) therethrough, and a third slot (330) configured to dispense a third active material (246) therethrough; and a first spacer (410), a second spacer (420), and a third spacer (430, 440) inserted into the first, second, and third slots (310, 320, 330), respectively, wherein the first, second, and third slots (310, 320, 330) are sequentially aligned in a direction of travel of a substrate movable through the slot die coater and configured to form an active material coating layer having multilayers on which the active materials dispensed through the first, second, and third spacers (410, 420, 430, 440) are stacked.

## Description

### BACKGROUND

### 1. Field

Aspects of the present disclosure relate to a slot die coater.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

A negative plate for a secondary battery is produced by applying a negative electrode active material layer on the surface of a substrate and then drying the resultant structure. A negative electrode active material included in the negative electrode active material layer may include a carbon-based negative electrode active material, a silicon-based negative electrode active material, or a combination thereof. The carbon-based negative electrode active material has the advantage of higher stability than the silicon-based negative electrode active material, but has the problem having a smaller energy storage capacity than the silicon-based negative electrode active material.

Therefore, it is desirable to increase the content of the silicon-based negative electrode active material from the perspective of improving the capacity of the battery, but in the example of increasing the content of the silicon-based negative electrode active material, there is a problem that the lifetime of the battery is reduced due to the volume expansion of the silicon-based negative electrode active material.

The above information disclosed in this Background section is for enhancement of understanding of the background of the present disclosure, and therefore, it may contain information that does not constitute related (or prior) art.

### SUMMARY

Aspects of the present disclosure are directed to a manufacturing apparatus for manufacturing a pole plate for a secondary battery in a continuous process to achieve extension of the lifetime of the battery by reducing volume expansion, and to a pole plate manufactured by the same manufacturing apparatus.

These and other aspects and features of the present disclosure will be described in or will be apparent from the following description of embodiments of the present disclosure.

According to some embodiments of the present disclosure, there is provided a slot die coater including: a slot die configured to include a first slot through which a first active material is dispensed, a second slot through which a second active material is dispensed, and a third slot through which a third active material is dispensed; and a first spacer, a second spacer, and a third spacer inserted into the first, second, and third slots, respectively, wherein the first, second, and third slots are sequentially aligned in a direction of travel in which a substrate moves to form an active material coating layer having a multilayer in which the active materials dispensed through the first, second, and third spacers are stacked.

In some embodiments, the content of a carbon-based material in each of the first active material and the third active material is greater than the content of a carbon-based material in the second active material, and a content of a silicon-based material in each of the first active material and the third active material is less than a content of a silicon-based material in the second active material.

In some embodiments, the third spacer includes a first third spacer and a second third spacer aligned to contact the first third spacer, and the first third spacer and the second third spacer have different shapes.

In some embodiments, a thickness of the first third spacer and a thickness of the second third spacer are equal.

In some embodiments, each of the first spacer and the second third spacer has an opening provided as a cut in a region thereof to determine widths of the active materials coating the substrate.

In some embodiments, each of the second spacer and the first third spacer includes a slit portion having a plurality of slits to determine widths of the active materials coating the substrate, and the active material coating layer having a stripe pattern is formed through the slit portion.

In some embodiments, the slit portion of the first third spacer is configured such that the slits each have a first width and a plurality of teeth each having a second width are alternately repeated, and the slit portion of the second spacer is configured such that the slits each have the second width and a plurality of teeth each having the first width are alternately repeated.

In some embodiments, the slits in the second spacer and the slits in the first third spacer are arranged to be staggered with respect to one another.

In some embodiments, the first width is longer than the second width.

In some embodiments, a length of the teeth in the first third spacer is shorter than a length of the teeth in the second spacer by a set length so that distal ends of the teeth provided in the first third spacer are aligned to be formed inward by the set length than distal ends of the teeth in the second spacer.

In some embodiments, first coated portions coated with the second active material at the second width and uncoated portions not coated with the second active material are alternately arranged using the second spacer, and second coated portions coated with the third active material at the second width and third coated portions coated with the third active material at the first width are alternately arranged on top of the first coated portions and the uncoated portions using the first third spacer and the second third spacer.

In some embodiments, a thickness of the first coated portions corresponds to a thickness of the second coated portions, and a thickness of the third coated portions is different from a thickness of the first coated portions and from a thickness of the second coated portions.

In some embodiments, a flow rate ratio of the third active material coating the third coated portions to the third active material coating the second coated portions is between 1 and 3.

In some embodiments, a flow rate ratio of the third active material coating the third coated portions to the third active material coating the second coated portions is between 1.9 and 2.1.

In some embodiments, a flow rate ratio of the third active material coating the third coated portions to the third active material the second coated portions is between 3 and 4.

In some embodiments, a flow rate ratio of the third active material coating the third coated portions to the third active material coating the second coated portions is between 3.2 and 3.4.

In some embodiments, the set length is 4 mm or less.

In some embodiments, the set length is 2 mm or less.

According to some embodiments of the present disclosure, there is provided a system including the slot die coater as above defined and a pole plated movable through the slot die coater including a substrate.

The pole plate may include: the substrate; and a first active material layer, a second active material layer, and a third active material layer configured to coat a surface of the substrate, wherein the first active material layer is coated with a first active material, wherein the third active material layer is coated with a third active material, and wherein the second active material layer is coated with the third active material and a second active material alternately arranged in a direction of a width of the substrate.

In some embodiments, a content of a carbon-based material in each of the first active material and the third active material is greater than a content of a carbon-based material in the second active material, and wherein a content of a silicon-based material in each of the first active material and the third active material is smaller than a content of a silicon-based material in the second active material.

However, aspects and features of the present disclosure are not limited to those described above, and other aspects and features not mentioned will be clearly understood by a person skilled in the art from the detailed description, described below.

### BRIEF DESCRIPTION OF DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 illustrates an example of a secondary battery according to some embodiments of the present disclosure.
FIGS. 2 to 5 illustrate comparative examples of electrode plates according to some embodiments of the present disclosure.
FIG. 6 illustrates the configuration of the slot die coater according to some embodiments of the present disclosure.
FIG. 7 illustrates examples of the first spacer and a second third spacer according to some embodiments of the present disclosure.
FIG. 8 illustrates an example of the second spacer according to some embodiments of the present disclosure.
FIG. 9 illustrates an example of the first third spacer according to some embodiments of the present disclosure.
FIG. 10 illustrates an example of coating a substrate using the first spacer and the second third spacer according to some embodiments of the present disclosure.
FIG. 11 illustrates a cross-sectional diagram showing a pole plate according to some embodiments of the present disclosure.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

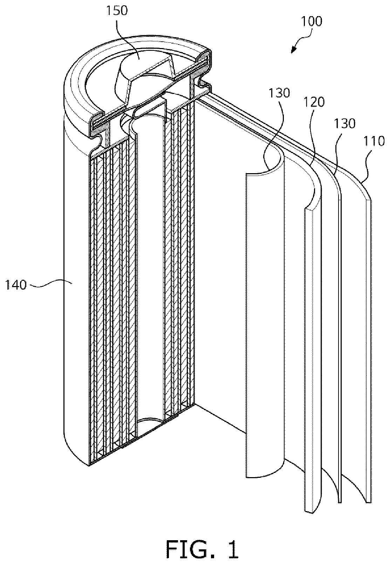

FIG. 1 illustrates an example of a secondary battery 100 according to some embodiments of the present disclosure. In an embodiment, the secondary battery 100 may include an electrode assembly, a case 140 provided to accommodate the electrode assembly and electrolyte therein, and a cap assembly 150 that is coupled to an opening of the case 140 to seal the opening of the case 140.

The electrode assembly may include a first electrode 120, a second electrode 110, and a separator 130 disposed between the first electrode 120 and the second electrode 110. The electrode assembly may be wound, folded, or stacked to be accommodated in the case 140. FIG. 1 illustrates the structure of the case 140 having a cylindrical shape, but the scope of the present disclosure is not limited thereto. For example, the case 140 of the secondary battery 100 of the present disclosure may have any shape, such as a cylindrical shape, a rectangular shape, a pouch shape, or a circular shape.

The first electrode 120 may include a first current collector and a first active material layer formed on the first current collector. A first tab may be formed to extend outward from a first uncoated region of the first current collector where the first active material layer is not formed, and the first tab may be electrically coupled to the cap assembly 150 or the case 140.

The second electrode 110 may include a second current collector and a second active material layer formed on the second current collector. A second tab may be formed to extend outward from a second uncoated region of the second current collector where the second active material layer is not formed, and the second tab may be electrically coupled to the case 140 or the cap assembly 150. In an embodiment, the first tab and the second tab may be formed to extend in opposite directions.

The first electrode 120 may serve as a positive electrode. In this case, the first current collector may be formed of, for example, an aluminum foil, and the first active material layer may include, for example, a transition metal oxide. The second electrode 110 may serve as a negative electrode. In this case, the second current collector may be formed of, for example, a copper foil or a nickel foil, and the second active material layer may include, for example, graphite.

In an embodiment, a plurality of secondary batteries 100 may be stacked to form a battery pack. This battery pack can be utilized in any device that requires high capacity and high output, such as a laptop, a smartphone, an electric vehicle, and the like.

The secondary battery 100 may be a lithium secondary battery, a sodium secondary battery, or the like. However, the scope of the present disclosure is not limited thereto, and the secondary battery 100 may include any battery capable of repeatedly providing electrical power through charging and discharging operation. In an embodiment, in a case where the secondary battery 100 is a lithium secondary battery, the secondary battery 100 may be used in an electric vehicle (EV) because of its excellent life cycle and high rate performance. For example, the lithium secondary battery may be used in a hybrid vehicle such as a plug-in hybrid electric vehicle (PHEV). The lithium secondary battery may also be used in applications that require large amounts of power storage. For example, the lithium secondary battery can be used in an electric bicycle, a power tool, and similar applications.

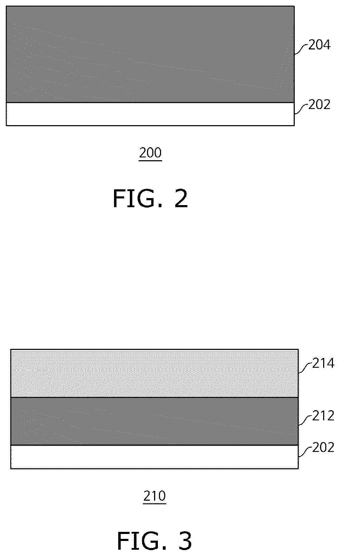

FIG. 2 to 5 illustrate comparative examples of electrode plates according to some embodiments of the present disclosure. According to some embodiments, the negative plate for a secondary battery includes a substrate 202 and a negative electrode active material layer provided on or on top of the substrate. The negative electrode active material layer may include a negative electrode active material, and may further include a binder and/or a conductive material.

FIG. 2 illustrates an example of an electrode plate 200 according to a first comparative example. According to the first comparative example, a single active material layer 204 may be formed on top of the substrate 202. Here, the active material layer 204 may include a negative electrode active material and a binder. In addition, the negative electrode active material may include a carbon-based negative electrode active material, a silicon-based negative electrode active material, or a combination thereof.

In an example in which the single active material layer 204 is formed using the carbon-based negative electrode active material, the problem of lower energy density compared to an example in which the silicon-based negative electrode active material is used may occur. This problem may be solved or substantially alleviated by using the silicon-based negative electrode active material in place of the carbon-based negative electrode active material. In this example, however, due to volume expansion of the silicon-based negative electrode active material, the problem of the reduced battery lifetime may occur.

Therefore, in a pole plate including the single active material layer 204, it is desired to increase the content of the silicon-based negative electrode active material from the viewpoint of improving the capacity of the battery, but it is also desired to increase the content of the carbon-based negative electrode active material from the viewpoint of extending the battery lifetime, so that there is a problem of being unable to improve the capacity and extend the battery lifetime. In addition, to produce a pole plate having sufficient energy density, an active material layer having a set or predetermined thickness or more is to be formed, but in an example in which the pole plate includes the single active material layer 204, it is difficult to uniformly apply an active material layer having a set or predetermined thickness or more.

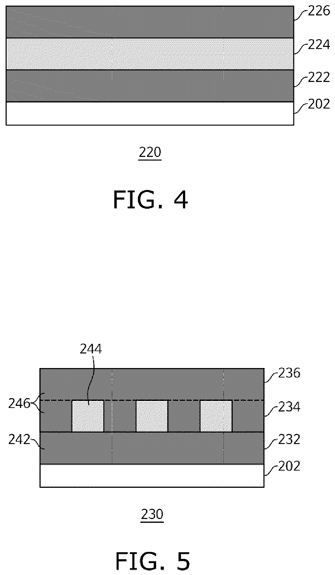

FIGS. 3 and 4 illustrate examples of the cross-sections of pole plates 210 and 220 according to a second comparative example. According to the second comparative example, a plurality of active material layers may be formed on top of the substrate 202. For example, as shown in FIG. 3, a first active material layer 212 may be formed on top of the substrate 202, and a second active material layer 214 may be formed on top of the first active material layer 212. In addition, as shown in FIG. 4, a first active material layer 222 may be formed on top of the substrate 202, a second active material layer 224 may be formed on the first active material layer 222, and a third active material layer 226 may be formed on top of the second active material layer 224.

In this example, the problem of applying the active material layer having a set or predetermined thickness or more at a single time may be overcome by sequentially applying the active material layers. In addition, by alternately applying the carbon-based negative electrode active material and the silicon-based negative electrode active material, the problem of the reduced lifetime of the silicon-based negative electrode active material due to volume expansion may be partially solved.

However, in an example in which the active material layers are applied sequentially, there is a problem that the process takes a long time. For example, in an example in which the active material is applied a plurality of times by, for example, applying the first active material on top of the substrate, drying the first active material, and then applying the second active material, the manufacturing time of the pole plates may be extended, thereby adversely reducing productivity.

FIG. 5 illustrates an example of the cross-section of a pole plate 230 produced in a continuous process using a slot die coater 300 according to some embodiments of the present disclosure. As shown in FIG. 5, a first active material layer 232 including a first active material 242 may be formed on top of the substrate 202 of the pole plate 230, and a second active material layer 234 including a second active material 244 may be formed on the first active material layer 232. In this example, the second active material 244 may be applied in a stripe pattern. Thereafter, a third active material 246 may be applied to the second active material layer 234 and the third active material layer 236. That is, the second active material 244 and the third active material 246 may be alternately arranged on the second active material layer 234. In addition, each of the first active material 242 and the third active material 246 may include the carbon-based negative electrode active material, and the second active material 244 may include the silicon-based negative electrode active material. Accordingly, the pole plate having a structure in which the silicon-based negative electrode active material (e.g., the second active material) is wrapped in the carbon-based negative electrode active material (e.g., the first active material or the third active material) may be produced.

In this example, an effect of physically restraining the expansion of the silicon-based negative electrode active material by the carbon-based negative electrode active material may be achieved. As a result, the stability of the pole plate may be improved (e.g., increased) and the lifetime of the battery may be extended. Furthermore, by manufacturing the pole plate 230 in a continuous process using the single slot die coater 300, the problem of reduced productivity due to the extended manufacturing time may be solved or substantially alleviated.

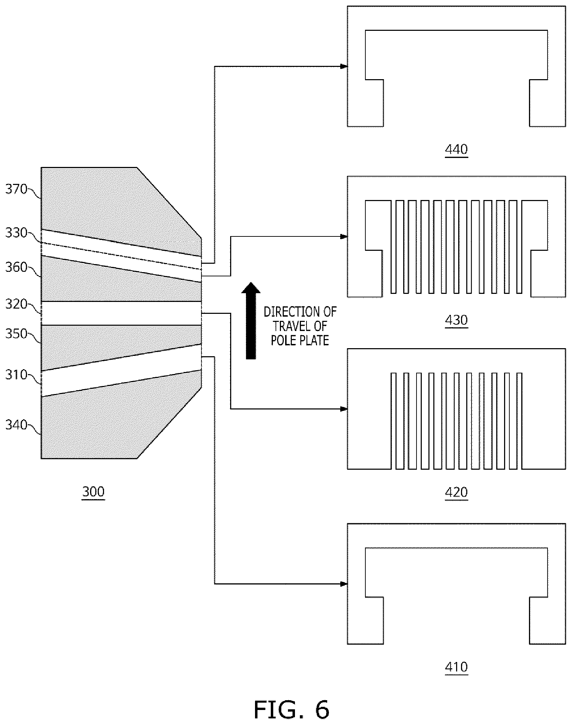

FIG. 6 illustrates the configuration of the slot die coater 300 according to some embodiments of the present disclosure. The slot die coater 300 according to some embodiments of the present disclosure may include four die blocks 340 to 370 and three slots 310 and 330 respectively formed between corresponding ones of the die blocks 340 to 370. Further, the slot die coater 300 may include spacers 410 to 440 provided between the die blocks 340 to 370 and inserted into the slots 310 and 330. As a result, paths may be formed to allow the active material to flow through the slots 310 and 330, and the flowed active material may be dispensed, with the flow rate and position thereof being controlled by the spacers 410 and 440.

The die blocks 340 to 370 included in the slot die coater 300 may be stacked and sequentially aligned in the direction of travel of the pole plate. Accordingly, the slots 310 and 330 formed between die blocks 340 to 370 may also be aligned in the direction of travel of the polar plates.

According to some embodiments, the first spacer 410 may be inserted into the first slot 310. Accordingly, the first active material that has flowed through the first slot 310 may be dispensed through the first spacer 410. Further, an opening cut in the direction in which the active material is dispensed may be formed in the first spacer 410. The flow rate and position of the first active material dispensed through the first spacer 410 may be controlled through the opening. Accordingly, the width at which the first active material is dispensed through the first spacer 410 may be determined to be equal to the width of the opening formed in the first spacer 410.

According to some embodiments, the second spacer 420 may be inserted into the second slot 320 in the direction in which the active material is dispensed. A slit portion formed in the second spacer 420 may be configured such that a plurality of slits and a plurality of teeth are alternately repeated, and the second active material dispensed through the second spacer 420 may be dispensed through the slits. The flow rate and position of the second active material dispensed through the second spacer 420 may be controlled through the slit portion.

According to some embodiments, a 3_1st spacer 430 (also referred to as a first third spacer) and a 3_2nd spacer 440 (also referred to as a second third spacer) may be inserted into the third slot 330 in an overlapping state. Accordingly, the third active material that has flowed through the third slot 330 may be dispensed through the 3_1st spacer 430 and the 3_2nd spacer 440.

The 3_1st spacer 430 may have a slit portion having a plurality of slits formed in the direction in which the active material is dispensed (e.g., in the general flow direction of the active material). The slit portion formed in the 3_1st spacer 430 may be configured such that the slits and the teeth are alternately repeated, so that the third active material dispensed through the 3_1 st spacer 430 may be dispensed through the slits. The flow rate and position of the third active material dispensed through the 3_1st spacer 430 may be controlled through the slit portion.

In addition, the 3_1st spacer 430 may have an opening cut in the direction in which the active material is dispensed so that a third active material may be dispensed in a width equal to the width of the opening formed in the 3_1st spacer 430. The thickness of the 3_1st spacer 430 and the thickness of the 3_2nd spacer 440 may be the same. The flow rate and position of the third active material dispensed through the 3_1st spacer 430 may be controlled through the opening.

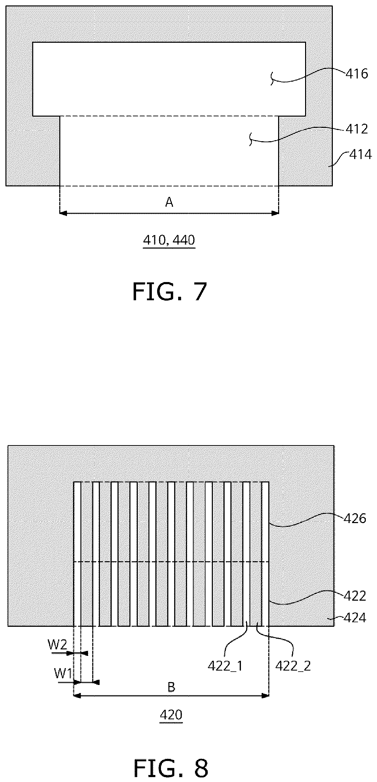

Specific shapes of the spacers will be described in further detail later with reference to FIGS. 7 to 9.

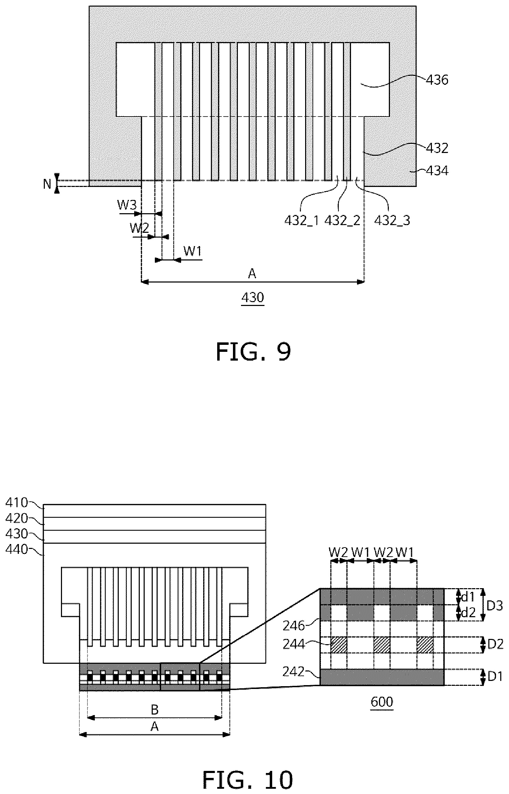

According to some embodiments, the slot die coater 300 may dispense the active material at an angle perpendicular or oblique to the direction of travel of the pole plate. The first active material dispensed from the first slot 310 may first contact the surface of the substrate and form a first active material layer. Thereafter, the second active material dispensed from the second slot 320 may form a second active material layer on top of the first active material layer. Thereafter, the third active material dispensed from the third slot 330 may form a third active material layer on top of the second active material layer. The specific shape of the active material layer formed by the slot die coater 300 will be described in further detail later with reference to FIGS. 9 and 10.

The configuration described above may allow the slot die coater 300 to continuously apply the first active material, the second active material, and the third active material to the surface of the substrate as the pole plate moves. Accordingly, the pole plate being coated by the slot die coater 300 may form an active material layer in the form of a multilayer structure in which the first active material, the second active material, and the third active material are continuously stacked.

FIG. 7 illustrates examples of the first spacer 410 and the 3_2nd spacer 440 according to some embodiments of the present disclosure; FIG. 8 illustrates an example of the second spacer 420 according to some embodiments of the present disclosure; and FIG. 9 illustrates an example of the 3_1st spacer 430 according to some embodiments of the present disclosure.

Referring to FIG. 7, the first spacer 410 may include an opening 412 cut in the direction in which the active material is dispensed, wings 414 provided on opposite sides of the opening 412, a flow portion 416 to which the active material is supplied.

According to some embodiments, the first active material received in a cavity associated with the first slot may be supplied through the flow portion 416 formed in the first spacer 410. The first active material supplied to the flow portion 416 may be dispensed through the opening 412 formed in the first spacer 410, thereby forming an active material layer. The width of the active material layer applied through the first spacer 410 may be determined by the width A of the opening 412 formed in the first spacer 410.

The shape of the 3_2nd spacer 440 and the shape of the first spacer 410 may be the same. Accordingly, the width A of the opening formed in the 3_2nd spacer 440 may be the same as the width A of the opening formed in the first spacer 410. Similarly, the width A of the active material layer applied through the 3_2nd spacer 440 may be the same as the width A of the active material layer applied through the first spacer 410.

Referring to FIG. 8, the second spacer 420 may have a slit portion 422 formed in a direction in which the active material is dispensed, wings 424 formed on opposite sides of the slit portion 422, and a flow portion 426 through which the active material is supplied. In addition, the slit portion 422 may be configured such that a plurality of slits 422_1 and a plurality of teeth 422_2 are alternately repeated.

According to some embodiments, the second active material flowing through the cavity associated with the second slot may be fed through the flow portion 426 formed in the second spacer 420. The flow portion 426 refers to the upper region of the slits 422_1, and in FIG. 8, the top and bottom thereof are indicated by dotted lines. The second active material supplied into the flow portion 426 may be dispensed through the slit portion 422 corresponding to the lower region of the slits 422_1 formed in the second spacer 420, thereby forming a stripe pattern of active material layers. The slit portion 422 is shown in FIG. 8 such that the top and bottom thereof are indicated by dotted lines. The overall width of the application region of the active material layer formed through the second spacer 420 may be determined by the width B of the slit portion 422 formed between the wings 424 of the second spacer 420.

According to some embodiments, the widths W1 of the teeth 422_2 included in the slit portion 422 may be constant with respect to each other. Further, the widths W2 of the slits 422_1 included in the slit portion 422 may be constant with respect to each other. For example, the slit portion 422 may be configured such that the teeth 422_2 having the first width W1 and the slits 422_1 having a second width W2 are alternately repeated. Accordingly, the active material layer formed through the second spacer 420 may form a stripe pattern of the active material layer in which the active material layer is applied in the width direction with widths each corresponding to (e.g., substantially equal to) the second width W2 at intervals each corresponding to (e.g., substantially equal to) the first width W1.

Referring to FIG. 9, the 3_1st spacer 430 may have a slit portion 432 formed in a direction in which the active material is dispensed, wings 434 formed on opposite sides of the slit portion 432, and a flow portion 436 through which the active material is supplied. The slit portion 432 may be configured such that a plurality of slits 432_1 and a plurality of teeth 432_2 are alternately repeated.

According to some embodiments, the third active material flowing through the cavity connected to the third slot may be supplied through the flow portion 436 formed in the 3_1st spacer 430. The flow portion 426 refers to the upper region of the slits 432_1, and in FIG. 9, the top and bottom thereof are indicated by dotted lines.

The third active material supplied to the flow portion 436 may be dispensed through the slit portion 432 formed in the 3_1st spacer (first third spacer) 430 to form an active material layer in a stripe pattern. The slit portion 432 refers to the lower region of the slits 432_1, and in FIG. 9, the top and bottom of thereof are indicated by dotted lines. The total width of the application region of the active material layer formed through the 3_1st spacer 430 may be determined by the width A of the slit portion 432 formed between the wings 434 of the 3_1st spacer 430.

According to some embodiments, the width W2 of the teeth included in the slit portion 432 may be constant with respect to each other. Further, the width W3 of slits 432_3 formed on both left and right ends among the slits included in slit portion 432 may be constant. Among the slits included in the slit portion 432, the width W3 of all the slits 432_1 except for the two slits 432_3 formed on both the left and right ends may be constant. For example, the slit portion 432 may be configured such that the slits 432_3 having the third width W3 are formed on both left and right ends, and in at center, the teeth 432_2 having the second width W2 and the slits 432_1 having the first width W1 are alternately repeated.

According to some embodiments, the first width W1 and the third width W3 may be different from each other. According to some embodiments, the length ratio of the first width W1 and the third width W3 may be 5:6.5; however, this is merely an example and the length ratio is not limited thereto.

According to some embodiments, the width W1 of the teeth 422_2 formed in the second spacer 420 and the width W1 of the slits 432_1 formed in the 3_1st spacer 430 may be the same. In addition, the width W2 of the slits 422_1 formed in the second spacer 420 and the width W2 of the teeth 432_2 formed in the 3_1st spacer 430 may be the same. According to some embodiments, the ratio between the first width W3 and the second width W2 may be 5:3; however, this is merely an example and the length ratio is not limited thereto.

In addition, the width B of the slit portion 432 formed in the 3_1st spacer 430 may be smaller than the width A of the slit portion 422 formed in the second spacer 420. For example, the width of both wings 424 formed in the second spacer 420 may extend to be wider than the width of both wings 434 formed in the 3_1st spacer 430 by the third width W3. Accordingly, the slits 422_1 formed in the second spacer 420 and the slits 432_1 formed in the 3_1st spacer 430 may be aligned to be staggered with respect to one another on the slot die coater 300. Due to this configuration, the different active material layers of the stripe pattern may be arranged to be staggered with respect to one another.

According to some embodiments, the distal end of the slit portion 432 of the 3_1st spacer 430 may be formed to be reversed (e.g., formed inward) by a set or predetermined length N from the end of the wings 434 of the 3_1 st spacer 430. For example, the height of the slit portion 432 of the 3_1st spacer 430 may be shorter than the height of the wings 434 of the 3_1st spacer 430 by the set or predetermined length N. In response to providing the reverse length N by which the distal end of each of the teeth 432_2 formed in the slit portion 432 of the 3_1st spacer 430 is retracted from the distal ends of the wings 434 of the 3_1st spacer 430, the flow rate of the active material dispensed from the slit portion 432 may be regulated. For example, the flow rate ratio between the active material flowing at the ends of the slits 432_1 and the active material flowing at the ends of the teeth 432_2 dispensed from the slits 432_1 formed in the slit portion 432 may be adjusted. An example of adjusting the flow rate ratio by the reverse length N will be described in further detail below with reference to FIG. 10.

FIG. 10 illustrates an example of coating a substrate by using the spacers 410 to 440 according to some embodiments of the present disclosure.

The first spacer 410, the second spacer 420, the 3_1st spacer 430, and the 3_2nd spacer 440 may be inserted into the slot die coater 300, and may be sequentially aligned in the direction of travel of a pole plate. Accordingly, the slot die coater 300 may continuously apply the first active material 242, the second active material 244, and the third active material 246 to the surface of the substrate to form an active material layer in the form of a multilayer structure in which the first active material layer, the second active material layer, and a third active material layer are continuously stacked.

The first active material 242 dispensed through the first spacer 410 may form the first active material layer. For example, the first active material 242 flowing into the first slot may be dispensed through the first spacer 410 to form a first active material layer having a first thickness D1 on the substrate. The width of the first active material layer formed through the first spacer 410 may be determined by the width A of an opening formed in the first spacer 410. The width A of the opening may be defined as the inner distance between the opposite wings 434.

The second active material 244 dispensed through the second spacer 420 may form a second active material layer. For example, the second active material 244 flowing into the second slot may be dispensed through the second spacer 420 to form a second active material layer having a second thickness D2 on top of the first active material layer. The total width of the second active material layer region formed through the second spacer 420 may be determined by the width B of the opening formed in the second spacer 420.

The second active material 244 dispensed through the second spacer 420 may form an active material layer in a stripe pattern. For example, coated portions having the second width W2 and uncoated portions having the first width W1 may be formed alternately in accordance with the width W2 of the slits and the width W1 of the teeth formed in the slit portion 422 of the second spacer 420.

The third active material 246 dispensed through the 3_1st spacer 430 and 3_2nd spacer 440 may form the third active material layer. For example, the third active material 246 flowing into the third slot may be dispensed through the 3_1st spacer 430 and the 3_2nd spacer 440 to form the third active material layer. The overall width of the third active material layer region formed through the 3_1st spacer 430 and the 3_2nd spacer 440 may be determined by the width A of the opening formed in the 3_1st spacer 430 and the 3_2nd spacer 440.

The thickness of the third active material layer may vary depending on the position of the electrode plate in the width direction. For example, an active material layer having a 3_1st thickness d1 may be formed on top of the coated portions coated with the second active material layer, and an active material layer having a third thickness D3 may be formed on top of the uncoated portions not coated with the second active material layer. That is, the third active material layer in which the active material layer having the 3_1st thickness d1 and the active material layer of the third thickness D3 are alternately repeated may be formed depending on whether the second active material layer is coated.

The thickness ratio depending on the position of the third active material layer in the width direction may be adjusted by the reverse length N applied to the slit portion of the 3_1st spacer 430. For example, by virtue of the reverse length N to the slit portion, a portion of the active material dispensed from the slits may flow to the ends of the teeth. Accordingly, the flow rate ratio of the active material flowing at the ends of the slits and the active material flowing at the ends of the teeth may vary, thereby changing the thickness of the third active material layer depending on the position in the width direction.

For example, the active material layer having the third thickness D3 may be formed at positions corresponding to the slits, and the active material layer having the 3_1st thickness d1 may be formed at positions corresponding to the teeth. That is, the active material layer having the first width W1 and the third thickness D3 may be formed on top of the uncoated portions not coated with the second active material layer, and the active material layer having the second width W2 and the 3_1st thickness d1 may be formed on top of the coated portions coated with the second active material layer.

In some embodiments, the pole plate 600 according to some embodiments of the present disclosure may be designed such that the ratio of the thickness D1 of the first active material layer, the thickness D2 of the second active material layer, and the thickness d1 of the third active material layer coated on top of the second active material layer is 1:1:1. In this example, the ratio between the 3_1st thickness d1 and the third thickness D3 in the third active material layer may be designed to be 1:2.

In some embodiments, the flow rate ratio of the third active material 246 for manufacturing the pole plate 600 having the configuration described above may be calculated based on the ratio of the 3_1st thickness d1 and the third thickness D3. For example, because the ratio of the third thickness D3 to the 3_1st thickness d1 is 2, the flow rate ratio of the third active material 246 flowing at respective positions may be calculated to be between 1 and 3. For example, the flow rate ratio of the third active material 246 flowing at each location can be calculated to be about 2.

The first active material layer, the second active material layer, and the third active material layer are shown spaced apart from each other in FIG. 10, but this is for illustrative purposes only, and the first active material layer, the second active material layer, and the third active material layer may be stacked sequentially to have a stacked structure.

Table 1 below shows examples of flow rate ratios calculated by variously changing the reverse length N applied to the slit portion of the 3_1st spacer 430, based on the thickness ratio of the third active material layer. Here, the flow rate ratio refers to the ratio of the flow rate of the active material flowing at positions corresponding to the slits in the 3_1st spacer 430 to the flow rate of the active material flowing at positions corresponding to the teeth.

**Table 1**

| N (mm) | Flow rate ratio |
|---|---|
| 5 | 1.80 |
| 4 | 1.92 |
| 3.8 | 1.96 |
| 3.6 | 2.01 |
| 3.4 | 2.06 |

According to Table 1, the reverse length N applied to the slit portion of the 3_1st spacer 430 is desirably designed to be between 3 mm and 4 mm. For example, the reverse length N applied to the slit portion of the 3_1st spacer 430 may correspond to about 3.6 mm. In this example, the ratio of the third thickness D3 to the 3_1st thickness d1 may correspond to 2. The third thickness D3 may correspond to the sum of the 3_1st thickness d1 and the 3_2nd thickness d2, and in an example in which the 3_1st thickness d1 and the 3_2nd thickness d2 have the same or equivalent thickness, the ratio of the third thickness D3 to the 3_1st thickness d1 may correspond to 2.

In some other embodiments, the flow rate ratio of the third active material 246 for manufacturing the pole plate 600 having the configuration described above may be calculated based on the cross-sectional area of the third active material layer. For example, the cross-sectional area of the active material layer coated at the third thickness D3 may be determined to be W1xD3, and the cross-sectional area of the active material layer coated at the 3_1st thickness d1 may be determined as W2xd1. That is, assuming that the ratio of the first width W1 and the second width W2 is 5:3, and the ratio of the third thickness D3 and the 3_1st thickness d1 is 2:1, the ratio of the cross-sectional areas of the respective active material layers may be determined to be 10:3. Further, because the ratio of the cross-sectional area W1xD3 to the cross-sectional area W2xd1) is 3.3, the ratio of the flow rate of the third active material 246 flowing at the respective positions may be calculated to be between 3 and 4. For example, the ratio of the flow rate of the third active material 246 flowing at the respective positions may be calculated to be about 3.33.

Table 2 below shows examples of flow rate ratios calculated by variously changing the reverse length N applied to the slit portion of the 3_1st spacer 430, based on the cross-sectional area ratio of the third active material layer. Here, the flow rate ratio refers to the flow rate ratio of the active material flowing at positions corresponding to the slits in the 3_1st spacer 430 to the flow rate of the active material flowing at positions corresponding to the teeth.

**Table 2**

| N (mm) | Flow rate ratio |
|---|---|
| 2 | 2.90 |
| 1.75 | 3.23 |
| 1 | 5.22 |

According to Table 2, the reverse length N applied to the slit portion of the 3_1st spacer 430 may be between 1 mm and 2 mm. For example, the reverse length N applied to the slit portion of the 3_1st spacer 430 may be designed to be about 1.75 mm.

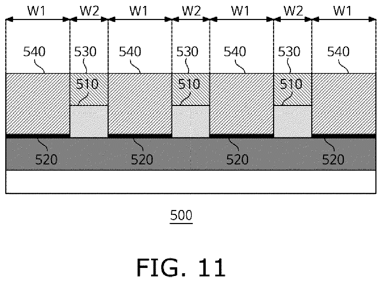

FIG. 11 illustrates a cross-sectional diagram showing the pole plate 500 according to some embodiments of the present disclosure.

According to some embodiments, the pole plate 500 manufactured using the slot die coater 300 according to the present disclosure may forms an active material layer in the form of a multilayer structure in which the first active material layer, the second active material layer, and the third active material layer are sequentially stacked.

According to some embodiments, a first active material layer in which the first active material is applied may be formed on top of the substrate (e.g., a dark shaded bottom layer in FIG. 11). Thereafter, a second active material layer may be formed on top of the first active material layer. In the second active material layer, a first coated portions 510 coated with the second active material at a second width W2 and uncoated portions 520 not coated with the second active material may be formed alternately. Thereafter, a third active material layer may be formed on top of the second active material layer. In the third active material layer, second coated portions 530 coated with the third active material at a second width W2 and third coated portions 540 coated with the third active material at a first width W1 may be formed alternately on top of the first coated portions 510 and the uncoated portions 520, respectively.

According to some embodiments, the content of the carbon-based material included in each of the first active material and the third active material may be greater than the content of the carbon-based material included in the second active material. In addition, the content of the silicon-based material included in each of the first active material and the third active material may be less than the content of the silicon-based material included in the second active material.

In the configuration described above, the pole plate 500 may be arranged such that the active material having a greater content of the carbon-based material, for example, the first active material or the third active material, is wrapped around the active material having a greater content of the silicon-based material, for example, the second active material. As a result, a structure that physically restrains the expansion of the silicon-based material by means of the carbon-based material may be formed. Accordingly, the stability of the structure of the pole plate may be improved (e.g., increased), thereby extending the lifetime of the battery.

As the positive electrode active material, a compound capable of reversibly intercalating/deintercalating lithium (e.g., a lithiated intercalation compound) may be used. For example, at least one of a composite oxide of lithium and a metal selected from cobalt, manganese, nickel, and combinations thereof may be used.

The composite oxide may be a lithium transition metal composite oxide, and examples thereof may include a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any one of the following formulas may be used: LiₐA_{1-b}X_{b}O_{2-c}D_{c}(0.90≤8≤1.8, 0≤b≤0.5, 0≤c≤0.05); LiₐMn_{2-b}X_{b}O_{4-c}D_{c}(0.90≤a≤1.8, 0≤b≤0.5, 0≤c≤0.05); LiₐNi_{1-b-c}Co_{b}X_{c}O_{2-α}D_{α}(0.90≤a≤1.8, 0≤b≤0.5, 0≤c≤0.5, 0<α<2); LiₐNi_{1-b-c}Mn_{b}X_{c}O_{2-α}D_{α}(0.90≤a≤1.8, 0≤b≤0.5, 0≤c≤0.5, 0<α<2); LiₐNi_{b}Co_{c}L¹_{d}GₑO₂(0.90≤8≤1.8, 0≤b≤0.9, 0≤c≤0.5, 0≤d≤0.5, 0≤e≤0.1); LiₐNiG_{b}O₂(0.90≤a≤1.8, 0.001≤b≤0.1); LiₐCoG_{b}O₂(0.90≤a≤1.8, 0.001≤b≤0.1); LiₐMn_{1-b}G_{b}O₂(0.90≤a≤1.8, 0.001≤b≤0.1); LiₐMn₂G_{b}O₄(0.90≤a≤1.8, 0.001≤b≤0.1); LiₐMn_{1-g}G_{g}PO₄(0.90≤a≤1.8, 0≤g≤0.5); Li_{(3-f)}Fe₂(PO₄)₃(0≤f≤2); LiₐFePO₄(0.90≤a≤1.8).

In the above formulas: A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

A positive electrode for a lithium secondary battery may include a current collector and a positive electrode active material layer formed on the current collector. The positive electrode active material layer may include a positive electrode active material and may further include a binder and/or a conductive material.

The content of the positive electrode active material is in a range of about 90 wt% to about 99.5 wt% on the basis of 100 wt% of the positive electrode active material layer, and the content of the binder and the conductive material is in a range of about 0.5 wt% to about 5 wt%, respectively, on the basis of 100 wt% of the positive electrode active material layer.

The current collector may be aluminum (Al) but is not limited thereto.

The negative electrode active material may include a material capable of reversibly intercalating/deintercalating lithium ions, lithium metal, an alloy of lithium metal, a material capable of being doped and undoped with lithium, or a transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si-based negative electrode active material or a Sn-based negative electrode active material may be used as the material capable of being doped and undoped with lithium. The Si-based negative electrode active material may be silicon, a silicon-carbon composite, SiOx (0 < x < 2), a Si-based alloy, or a combination thereof.

The silicon-carbon composite may be a composite of silicon and amorphous carbon. According to an embodiment, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particle and an amorphous carbon coating layer on the surface of the core.

A negative electrode for a lithium secondary battery may include a current collector and a negative electrode active material layer disposed on the current collector. The negative electrode active material layer may include a negative electrode active material and may further include a binder and/or a conductive material.

For example, the negative electrode active material layer may include about 90 wt % to about 99 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. When an aqueous binder is used as the negative electrode binder, a cellulose-based compound capable of imparting viscosity may be further included.

As the negative electrode current collector, one selected from copper foil, nickel foil, stainless steel foil, titanium foil, nickel foam, copper foam, conductive metal-coated polymer substrate, and combinations thereof may be used.

An electrolyte for a lithium secondary battery may include a non-aqueous organic solvent and a lithium salt.

The non-aqueous organic solvent acts as a medium through which ions involved in the electrochemical reaction of the battery may move.

The non-aqueous organic solvent may be a carbonate-based, an ester-based, an ether-based, a ketone-based, an alcohol-based solvent, an aprotic solvent, and may be used alone or in combination of two or more.

In addition, when a carbonate-based solvent is used, a mixture of cyclic carbonate and chain carbonate may be used.

Depending on the type of lithium secondary battery, a separator may be present between the first electrode plate (e.g., the negative electrode) and the second electrode plate (e.g., the positive electrode). As the separator, polyethylene, polypropylene, polyvinylidene fluoride, or a multilayer film of two or more layers thereof may be used.

The separator may include a porous substrate and a coating layer including an organic material, an inorganic material, or a combination thereof on one or both surfaces of the porous substrate.

The organic material may include a polyvinylidene fluoride-based heavy antibody or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof but is not limited thereto.

The organic material and the inorganic material may be mixed in one coating layer or may be in the form of a coating layer containing an organic material and a coating layer containing an inorganic material that are laminated on each other.

Although the present disclosure has been described above with respect to embodiments thereof, the present disclosure is not limited thereto. Various modifications and variations may be made thereto by those skilled in the art within the equivalent scope of the appended claims.

### DESCRIPTION OF SOME REFERENCE NUMERALS

- 100:: secondary battery
- 110:: second electrode
- 120:: first electrode
- 130:: separator
- 140:: case
- 150:: cap assembly

## Claims

1. A slot die coater (300) comprising:
a slot die comprising a first slot (310) configured to dispense a first active material (242) therethrough, a second slot (320) configured to dispense a second active material (244) therethrough, and a third slot (330) configured to dispense a third active material (246) therethrough; and
a first spacer (410), a second spacer (420), and a third spacer (430, 440) inserted into the first, second, and third slots (310, 320, 330), respectively,
wherein the first, second, and third slots (310, 320, 330) are sequentially aligned in a direction of travel of a substrate movable through the slot die coater and configured to form an active material coating layer having multilayers on which the active materials dispensed through the first, second, and third spacers (410, 420, 430, 440) are stacked.

2. The slot die coater (300) as claimed in claim 1, wherein the slot die coater is configured such that a content of a carbon-based material in each of the first active material (242) and the third active material (246) is greater than a content of a carbon-based material in the second active material (244), and
that a content of a silicon-based material in each of the first active material (242) and the third active material (246) is less than a content of a silicon-based material in the second active material (244).

3. The slot die coater (300) as claimed in claim 1 or 2, wherein the third spacer comprises a first third spacer (430) and a second third spacer(440) aligned to contact the first third spacer (430), and
wherein the first third spacer (430) and the second third spacer (440) have different shapes from each other.

4. The slot die coater (300) as claimed in claim 3, wherein each of the first spacer (410) and the second third spacer (440) has an opening (412) provided as a cut in a region thereof configured to determine widths of the active materials coating a substrate movable through the slot die coater.

5. The slot die coater (300) as claimed in claim 3 or 4, wherein each of the second spacer (420) and the first third spacer(430) comprises a slit portion (422, 432) having a plurality of slits (422_1, 432_1) configured to determine widths of the active materials coating a substrate movable through the slot die coater, and
wherein the active material coating layer having a stripe pattern is formed through the slit portion (422).

6. The slot die coater (300) as claimed in claim 5, wherein the slit portion (432) of the first third spacer (430) is configured such that the slits (432_1) each having a first width (W1) and a plurality of teeth (432_2) each having a second width(W2) are alternately repeated, and
wherein the slit portion (422) of the second spacer (420) is configured such that the slits (422_1) each having the second width (W2) and a plurality of teeth (422_2) each having the first width (W1) are alternately repeated.

7. The slot die coater (300) as claimed in claim 6, wherein the slits (422_1) of the second spacer (420) and the slits (432_1) of the first third spacer(430) are arranged to miss one another.

8. The slot die coater (300) as claimed in claim 6 or 7, wherein the first width (W1) is greater than the second width (W2).

9. The slot die coater as claimed in any of claims 6 to 8, wherein a length of the teeth (432_2) of the first third spacer (430) is shorter than a length of the teeth (422_2) of the second spacer(420) by a set length (N) so that distal ends of the teeth (432_2) provided in the first third spacer (430) are aligned to be formed inward by the set length (N) than distal ends of the teeth (422_2) in the second spacer (420).

10. The slot die coater (300) as claimed in claim 9, wherein the slot die coater (300) is configured such that first coated portions (510) coated with the second active material at the second width (W2) and uncoated portions (520) not coated with the second active material are alternately arranged using the second spacer (420), and
that second coated portions (530) coated with the third active material at the second width (W2) and third coated portions (540) coated with the third active material at the first width (W1) are alternately arranged on top of the first coated portions (510) and the uncoated portions (520) using the first third spacer (430) and the second third spacer (440).

11. The slot die coater(300) as claimed in claim 10, wherein the slot die coater (300) is configured such that a thickness of the first coated portions (510) corresponds to a thickness of the second coated portions (530), and a thickness of the third coated portions (540) is different from a thickness of the first coated portions (510) and from a thickness of the second coated portions (530).

12. The slot die coater (300) as claimed in claim 10 or 11, wherein the slot die coater (300) is configured such that a flow rate ratio of the third active material coating the third coated portions (540) to the third active material coating the second coated portions (530) is between 1 and 3.

13. The slot die coater (300) as claimed in claim 10, wherein the slot die coater (300) is configured such that a flow rate ratio of the third active material coating the third coated portions (540) to the third active material the second coated portions (530) is between 3 and 4.

14. The slot die coater as claimed in claim 12, wherein the set length (N) is 4 mm or less.

15. The slot die coater as claimed in claim 13, wherein the set length (N) is 2 mm or less.
